# EUROPEAN PATENT APPLICATION

(11) **EP 4 848 401 A1**
(43) Date of publication of application: **02.12.2026**
(21) Application number: 25745170.8
(22) Date of filing: 22.01.2025
(51) Int. Cl.: H01M 10/0587, H01M 4/13, H01M 10/04, H01M 50/107, H01M 50/119, H01M 50/534

(54) **SECONDARY BATTERY**

(30) Priority: 25.01.2024 JP 2024009671
(71) Applicant: Panasonic Intellectual Property Management Co., Ltd., Kadoma-shi, Osaka 571-0057 (JP)
(72) Inventor: UCHIDA, Shuhei, Kadoma-shi, Osaka 571-0057 (JP)
(74) Representative: Novagraaf International SA
(86) International application number: PCT/JP2025/001943
(87) International publication number: WO 2025/159129

(57) **Abstract**

A secondary battery includes an electrode group in which a positive electrode, a negative electrode including a negative electrode current collector, and a separator disposed between the positive electrode and the negative electrode are wound, a tape that fixes the winding end portion of the electrode group, an electrolyte, and a bottomed cylindrical outer can that houses the electrode group, the tape, and the electrolyte. The negative electrode has an outermost peripheral portion disposed at the outermost periphery of the electrode group. The tape includes a metal base material layer, and is attached to the negative electrode current collector at the outermost peripheral portion. The negative electrode current collector at the outermost peripheral portion to which the tape is attached is in contact with the outer can. The coefficient of static friction of the metal base material layer against the material of the outer can is 0.8 or less.

## Description

### [Technical Field]

The present disclosure relates to a secondary battery including a wound electrode group.

### [Background Art]

A secondary battery includes an electrode group in which a positive electrode, a negative electrode, and a separator disposed between the positive electrode and the negative electrode are wound, an electrolyte, and an outer can that houses the electrode group and the electrolyte. A tape (winding stop tape) is attached to the peripheral surface of the wound electrode group, and the winding end portion is fixed by the tape.

Patent Literature 1 proposes "a nonaqueous electrolyte secondary battery including an electrode group in which a positive electrode, a negative electrode, and a separator disposed between the positive electrode and the negative electrode are wound, a tape that fixes at least a winding end portion of the electrode group, and a nonaqueous electrolyte, wherein at least in a charged state, the negative electrode contains either or both lithium metal and a lithium alloy, and the tape has a tensile strength of 20 N/10 mm or less when the elongation rate is 200% or more". Patent Literature 1 also describes that the substrate sheet of the tape is formed of a polymer such as a resin.

### [Citation List]

### [Patent Literature]

Patent Literature 1: International Publication No. 2019/003641 Pamphlet

### [Summary of Invention]

### [Technical Problem]

For the purpose of reducing the internal resistance, it is conceivable to configure the electrode group such that the negative electrode current collector is exposed on the outer peripheral surface of the electrode group in contact with the inner surface of the outer can. However, when a resin tape is used as the winding stop tape, the internal resistance may not be sufficiently reduced due to the resin tape interposed between the electrode group and the outer can having high resistance.

Furthermore, the secondary battery has a mechanism by which, upon occurrence of an internal short circuit, the sealing body attached to the opening of the outer can is detached due to an increase in internal battery pressure to eject the electrode group from the opening of the outer can. The operation of the mechanism suppresses an increase in battery temperature during an internal short circuit. When a resin tape is attached to the outer periphery of the electrode group, the resin tape may melt during an internal short circuit to delay the ejection of the electrode group, increasing the battery temperature.

### [Solution to Problem]

One aspect of the present disclosure relates to a secondary battery including: an electrode group in which a positive electrode, a negative electrode including a negative electrode current collector, and a separator disposed between the positive electrode and the negative electrode are wound; a tape that fixes a winding end portion of the electrode group; an electrolyte; and an outer can with a bottomed cylindrical shape that houses the electrode group, the tape, and the electrolyte, wherein the negative electrode has an outermost peripheral portion disposed at an outermost periphery of the electrode group, the tape includes a metal base material layer, and is attached to the negative electrode current collector at the outermost peripheral portion, the negative electrode current collector at the outermost peripheral portion to which the tape is attached and the outer can are in contact, and a coefficient of static friction of the metal base material layer against a material of the outer can is 0.8 or less.

### [Advantageous Effects of Invention]

According to the present disclosure, in a secondary battery, the internal resistance can be reduced and an increase in temperature during an internal short circuit can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic diagram of the configuration of a friction coefficient test.
[FIG. 2] FIG. 2 is a schematic cross-sectional view of an example of a secondary battery according to an embodiment of the present disclosure.
[FIG. 3] FIG. 3 is a schematic front view of an example of the side surface of a wound electrode group as viewed from the side of the winding end portion.
[FIG. 4] FIG. 4 is a schematic front view of an example of the side surface of the wound electrode group as viewed from the side opposite to the winding end portion.
[FIG. 5] FIG. 5 is a schematic top view of an example of one end surface of the wound electrode group as viewed from the winding axis direction.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit.

A secondary battery according to an embodiment of the present disclosure includes an electrode group in which a positive electrode, a negative electrode including a negative electrode current collector, and a separator disposed between the positive electrode and the negative electrode are wound, a tape that fixes the winding end portion of the electrode group, an electrolyte, and an outer can with a bottomed cylindrical shape. The outer can houses the electrode group, the tape, and the electrolyte. The negative electrode has an outermost peripheral portion disposed at the outermost periphery of the electrode group. The tape includes a metal base material layer and is attached to the negative electrode current collector at the outermost peripheral portion. Hereinafter, a tape including a metal base material layer is also referred to as "metal tape". The negative electrode current collector at the outermost peripheral portion to which the tape is attached and the outer can are in contact. The coefficient of static friction of the metal base material layer against the material of the outer can is 0.8 or less.

The outer can is in contact with the negative electrode current collector at the outermost peripheral portion to which the tape is attached. Specifically, the inner surface of the outer can have a first region in contact with the negative electrode current collector and a second region in contact with the metal tape (metal base material layer). In the second region, the low-resistance metal tape (metal base material layer) is disposed between the electrode group (negative electrode current collector at the outermost peripheral portion) and the outer can. As a result of the formation of the first region and the second region, the internal resistance of the secondary battery is significantly reduced, and an increase in internal resistance when a resin tape is disposed between the electrode group and the outer can is suppressed.

The secondary battery includes a mechanism by which the electrode group is ejected from the opening of the outer can once the sealing body attached to the opening of the outer can is detached due to an increase in internal battery pressure upon occurrence of an internal short circuit. The metal tape is superior in heat resistance to a resin tape including a resin substrate layer. Therefore, the delay in electrode group ejection due to the resin tape melting upon an internal short circuit, and an increase in battery temperature caused thereby are suppressed.

The coefficient of static friction of the metal base material layer against the material of the outer can is 0.8 or less. In this case, the frictional force generated between the metal base material layer and the outer can in activation of the electrode group ejection mechanism can be reduced, so that the electrode group is smoothly ejected, thereby suppressing an increase in battery temperature caused due to the delay in electrode group ejection.

From the viewpoint of suppressing the delay in electrode group ejection, the coefficient of static friction of the metal base material layer against the material of the outer can is preferably 0.6 or less.

In terms of ejecting the electrode group, the coefficient of static friction of the negative electrode current collector at the outermost peripheral portion against the material of the outer can is preferably 0.8 or less, and more preferably 0.6 or less.

The number of metal tapes may be one or more (e.g., two). When using multiple metal tapes, the multiple metal tapes do not include a metal tape including a metal base material layer with a coefficient of static friction against the material of the outer can of more than 0.8. That is, in any of the multiple metal tapes, the coefficient of static friction of the metal base material layer against the material of the outer can needs to be 0.8 or less. If at least one of the multiple metal tapes includes a metal base material layer having a coefficient of static friction of more than 0.8, the frictional force between the metal base material layer and the outer can increases, causing a delay in electrode group ejection.

Examples of the material of the outer can include iron (Fe), aluminum (Al), copper (Cu), nickel (Ni), and alloys containing any of these metals. Examples of alloys containing iron include stainless steel (SUS). Among all, SUS is preferred as the material of the outer can. The outer can may include a plating layer (e.g., an Ni plating layer) on the surface. When the outer can includes a plating layer on the surface, the material of the outer can in terms of coefficient of static friction means the material of the plating layer.

The coefficient of static friction of the metal base material layer against the material of the outer can can be determined as follows.

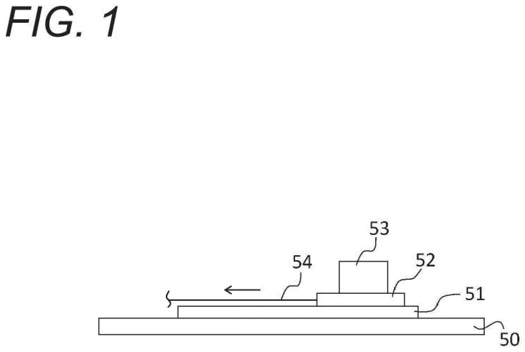

A coefficient of friction test in accordance with JIS K 7125 is performed. Specifically, as illustrated in FIG. 1, a first sample 51 is fixed on a horizontal sample stage 50, a second sample 52 is placed on the first sample 51, and a weight 53 is placed on the second sample 52 as necessary. The first sample 51 and the second sample 52 are brought into contact with each other in this manner, and left to stand horizontally. The total mass of the second sample 52 and the weight 53 is set to 500 g. When the mass of the second sample 52 is 500 g, the test is performed without using the weight 53.

Either the first sample 51 or the second sample 52 is a sample of the same material as the metal base material layer of the winding stop tape. The other of the first sample 51 and the second sample 52 is a sample of the same material as the outer can (or a plating layer when providing the plating layer on the surface). Each sample may be prepared by sampling respective portions of the base materials of the metal base material layer and a plate-shaped material used for producing the outer can. The contact area between the first sample 51 and the second sample 52 is set to 1200 mm². The first sample 51 is plate shaped. The second sample 52 is, for example, plate shaped, and may be rectangular prism shaped. The thicknesses of the first sample 51 and the second sample 52 are each between 0.05 and 0.5 mm, for example. The size of the plate-shaped second sample 52 is 30 mm by 40 mm, for example. When the second sample 52 is viewed from the normal direction of the main surface of the first sample 51, the second sample 52 has a smaller area than the first sample 51. The surface roughness (e.g., arithmetic mean roughness) of each sample is, for example, within the range of the surface roughness of a corresponding member used in batteries, such as the outer can or the metal base material layer. The arithmetic mean roughness Ra of each contact surface of the first sample 51 and the second sample 52 is, for example, 10 µm or less (or 5 µm or less). The arithmetic mean roughness Ra is an index expressing the surface roughness in accordance with JIS B 0601.

A pull cord 54 is attached to the second sample 52 and slid, and a load F (maximum static frictional force) generated at that point is measured using a load cell. The test speed at that point (speed of the second sample 52 being pulled in the direction of the arrow indicated in FIG. 1) is set to 1 mm/min. The coefficient of static friction is determined by calculating (load F/normal force) based on the measured load F. The normal force is 4.9 N. The normal force is calculated by multiplying the total mass (0.5 kg) of the second sample 52 and the weight 53 by 9.8 (m/s²). The above test is repeated 5 times, and an average value of the coefficients of static friction is obtained. In this way, the coefficients of static friction of the first sample 51 and the second sample 52 are determined.

The coefficient of static friction of the negative electrode current collector at the outermost peripheral portion against the material of the outer can can be determined by using a sample of the same material as the negative electrode current collector for either the first sample or the second sample in the above coefficient of friction test.

The outer can may have a bottomed cylindrical shape or a bottomed rectangular tubular shape. The wound electrode group may be columnar or flat. The electrode group with a columnar shape may be housed in an outer can with a bottomed cylindrical shape. Alternatively, the electrode group with a flat shape may be housed in an outer can with a bottomed rectangular tubular shape.

The negative electrode may include a negative electrode mixture layer supported on the negative electrode current collector. In this case, the negative electrode mixture layer is not supported in at least a portion of a region of the outermost peripheral portion that faces the outer can (negative electrode current collector is exposed). The negative electrode mixture layer may be formed on a surface of the negative electrode current collector that faces the positive electrode (positive electrode mixture layer). Preferably, the negative electrode mixture layer is not supported over 70% or more or 80% or more of the area of a region of the outermost peripheral portion that faces the outer can. More preferably, the negative electrode mixture layer is not supported in the entirety of the region of the outermost peripheral portion that faces the outer can. Preferably, the negative electrode mixture layer is not supported over 70% or more or 80% or more of the area of a region of the outermost peripheral portion where the tape is attached. More preferably, the negative electrode mixture layer is not supported over the entirety of the region of the outermost peripheral portion where the tape is attached.

Examples of secondary batteries include nonaqueous electrolyte secondary batteries such as lithium-ion secondary batteries and lithium-metal secondary batteries. The negative electrode of a lithium-ion secondary battery includes a negative electrode mixture layer supported on the negative electrode current collector. The negative electrode mixture layer contains a negative electrode active material that absorbs lithium ions during charging and releases the lithium ions during discharging. The negative electrode of the lithium-metal secondary battery is a negative electrode in which lithium metal deposits during charging and the lithium metal dissolves in the electrolyte during discharging, and may be composed only of the negative electrode current collector and lithium metal may deposit on the surface of the negative electrode current collector during charging. The negative electrode of the lithium-metal secondary battery may include a thin negative electrode mixture layer supported on the surface of the negative electrode current collector.

### (Winding Stop Tape)

The metal base material layer is composed of a foil-shaped or sheet-shaped base material, for example. The metal base material layer may contain one type of metal or two or more types. The metal base material layer may be an alloy layer containing two or more types of metals. The metal base material layer preferably contains at least one selected from the group consisting of nickel (Ni), iron (Fe), copper (Cu), titanium (Ti), zinc (Zn), silver (Ag), gold (Au), and stainless steel (SUS). In this case, the conductivity and heat resistance of the metal tape tend to be enhanced and the coefficient of static friction against the material of the outer can is easily controlled to 0.8 or less.

From the viewpoint of fixing the electrode group, the tape preferably includes an adhesive layer. The adhesive layer is preferably disposed on one of the surfaces of the metal base material layer (surface on the outermost peripheral side). In this case, the negative electrode current collector at the outermost peripheral portion and the metal base material layer are in close contact via the adhesive layer. The adhesive layer is formed of an adhesive. Examples of the adhesive include acrylic adhesives, silicone-based adhesives, and rubber-based adhesives. Among these, an acrylic adhesive is preferred in terms of, for example, heat resistance.

The proportion of the thickness of the adhesive layer to the thickness of the metal base material layer is 5 to 25%, for example. From the viewpoint of reducing the internal resistance, the thickness of the adhesive layer is 75 µm or less, for example. Even a low-conductivity adhesive layer included in the tape can be thinned to a level where the influence of the adhesive layer on the conductivity of the tape is almost negligible by being compressed between the inner surface of the outer can and the electrode group inside the battery.

The adhesive layer may have conductivity and may be formed of a conductive adhesive (e.g., an adhesive containing conductive particles). Examples of the conductive particles include metal particles and composite particles including resin particles and metal coating layers covering the surfaces of the resin particles. Examples of metals contained in the metal particles and the metal coating layers include Ni, Cu, Ag, and Fe. The metal particles and the metal coating layers may contain one type of metal or two or more types. Examples of the resin contained in the resin particles include acrylic resin and polystyrene.

From the viewpoint of easily reducing the internal resistance and easily ensuring energy density (battery capacity), the thickness of the tape is preferably 250 µm or less, and more preferably 200 µm or less. From the viewpoint of suppressing tape breakage, the thickness of the tape is 50 µm or more, for example. The thickness of the tape is the total thickness of the metal base material layer and the adhesive layer.

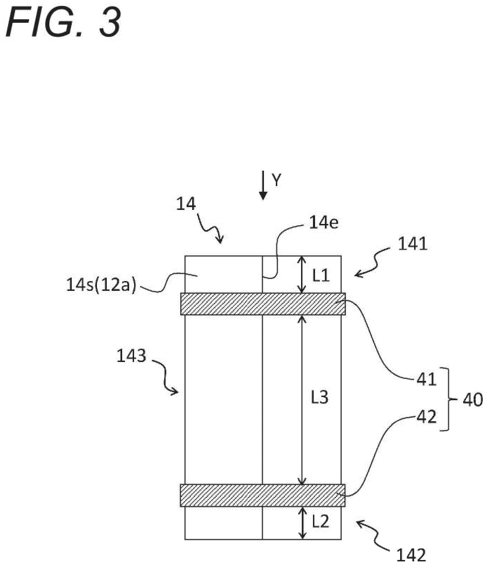

When the winding end portion is fixed by multiple tapes, it is preferred that each of the multiple tapes (e.g., tapes 41 and 42 in FIG. 3) has a thickness within the above preferable range. In addition, the thicknesses of the multiple tapes may differ within a range that does not impair the effect of reducing the internal resistance by the tapes. However, from the viewpoint of reducing the internal resistance and achieving uniformity of the surface pressure of the electrode group, it is preferred that the thicknesses of the multiple tapes are substantially the same as each other.

Preferably, the width of the tape is 4 mm or more and 12 mm or less. In this case, the tape can stably fix the winding end portion, and a sufficient contact area between the outer can and the outermost peripheral portion tends to be ensured.

When the winding end portion is fixed by multiple tapes, it is preferred that each of the multiple tapes (e.g., tapes 41 and 42 in FIG. 3) has a width within the above preferable range. In addition, the widths of the multiple tapes may differ from each other within a range that does not impair the internal resistance reducing effect by the tapes. However, from the viewpoint of reducing the internal resistance and achieving uniformity of the surface pressure of the electrode group, it is preferred that the widths of the multiple tapes are substantially the same as each other.

The tape is preferably wound around the electrode group so that both ends thereof do not overlap. When the winding end portion is fixed by multiple tapes, it is preferred that each of the multiple tapes is wound around the electrode group so that both ends do not overlap. The length of the tape (dimension in the length direction of the band-shaped tape) is preferably shorter than the length of the outer periphery of the electrode group by a value ranging from 1 mm to 7 mm. The tape is preferably wound, for example, 0.8 times or more and 0.99 times or less around the outer periphery of the electrode group. In this case, the effect of fixing the electrode group is enhanced, stress associated with expansion and contraction of the electrode group tend to be reduced, and damage to the positive and negative electrodes (particularly breakage of the negative electrode current collector) associated with expansion and contraction of the electrode group tends to be suppressed.

It is preferred that the tape includes a first tape and a second tape attached to the negative electrode current collector at the outermost peripheral portion on one end side and the other end side of the electrode group in the winding axis direction, respectively, and the first tape and the second tape each include a metal base material layer having a coefficient of static friction of 0.8 or less against the material of the outer can. In the above configuration, the negative electrode current collector at the outermost peripheral portion and the outer can are in contact at the central portion of the electrode group in the winding axis direction. Provision of the first tape and the second tape described above makes it easy to reduce the internal resistance and can more stably fix the winding end portion of the electrode group.

The following describes examples of elements of the nonaqueous electrolyte secondary battery. However, the secondary battery is not limited to the following description.

### (Negative Electrode)

The negative electrode includes, for example, a negative electrode current collector and a negative electrode mixture layer supported on a surface of the negative electrode current collector. The negative electrode mixture layer contains a negative electrode active material, a binder, and a thickener, for example. The negative electrode is obtained, for example, by applying a negative electrode slurry to each surface of the negative electrode current collector, and the resulting coating films are then dried and rolled to form negative electrode mixture layers. The negative electrode slurry contains a negative electrode mixture and a dispersion medium (e.g., water). The negative electrode mixture layer may be formed on only one surface of the negative electrode current collector, or may be formed on both surfaces. In doing so, the negative electrode current collector may be exposed without applying the negative electrode slurry to a predetermined region (a surface region facing the outer can) of the surface of the negative electrode current collector. Alternatively, the negative electrode current collector may be exposed in the predetermined region, for example, by scraping off the negative electrode mixture layer. In the case of a lithium-metal secondary battery, the negative electrode may be composed of only the negative electrode current collector, or a lithium foil may be pressure-bonded to the negative electrode current collector.

The negative electrode mixture contains at least the negative electrode active material, and may contain other components, as necessary. Examples of the other components include a binder, a thickener, and a conductive material.

As the negative electrode active material, a material that reversibly absorbs and releases lithium ions can be used. Examples of the negative electrode active material include carbonaceous materials, Si-containing materials, and Sn-containing materials. The negative electrode may contain one type of negative electrode active material, or may contain two or more types in combination. Examples of the carbonaceous material include graphite, graphitizable carbon (soft carbon), and non-graphitizable carbon (hard carbon).

Examples of the negative electrode active material include carbonaceous materials, Si-containing materials, and Sn-containing materials. The negative electrode may contain one type of negative electrode active material, or may contain two or more types in combination. Examples of the carbonaceous material include graphite, graphitizable carbon (soft carbon), and non-graphitizable carbon (hard carbon).

The conductive material is a carbon material, for example. Examples of the carbon material include carbon black, acetylene black, Ketjen black, carbon nanotubes, and graphite.

Examples of the binder include fluorocarbon resin, polyacrylonitrile, polyimide resin, acrylic resin, polyolefin resin, and rubber-like polymers. Examples of the fluorocarbon resin include polytetrafluoroethylene and polyvinylidene fluoride. Examples of the thickener include carboxymethyl cellulose (CMC) and Na salts of CMC.

The negative electrode current collector may be a conductive sheet. As the conductive sheet, a foil, a film, or the like is used.

Examples of the material of the negative electrode current collector (conductive sheet) include copper (Cu), nickel (Ni), iron (Fe), and alloys containing any of these metal elements. Examples of the alloys include copper alloys and stainless steel (SUS). Among these, either or both copper and a copper alloy having high conductivity are preferred.

The thickness of the negative electrode current collector is not particularly limited and is, for example, 5 µm or more and 300 µm or less.

### (Positive Electrode)

The positive electrode includes, for example, a positive electrode current collector and a positive electrode mixture layer supported on a surface of the positive electrode current collector. The positive electrode mixture layer contains a positive electrode active material, a conductive material, and a binder, for example. The positive electrode is obtained, for example, by applying a positive electrode slurry containing the positive electrode active material, the conductive material, and the binder to each surface of the positive electrode current collector, and the resulting coating films are then dried and rolled to form positive electrode mixture layers. The positive electrode slurry contains a positive electrode mixture and a dispersion medium (e.g., N-methyl-2-pyrrolidone). The positive electrode mixture layer may be formed on only one surface of the positive electrode current collector, or may be formed on both surfaces.

The positive electrode mixture contains at least the positive electrode active material, and may contain another component, as necessary. Examples of the other component include a binder and a conductive material.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, a lithium-containing transition metal oxide is preferred because of its low manufacturing cost and high average discharge voltage.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one type of transition metal element, or may contain two or more types. The transition metal element may include Ni and either or both Co and Mn. The lithium-containing transition metal oxide can contain one or more typical elements, as necessary. Examples of the typical element include Mg, Al, Ca, Zn, Ga, Ge, Sn, Sb, Pb, and Bi. The typical element may be Al, for example.

Among the lithium-containing transition metal oxides, a composite oxide that contains Ni and either or both Co and Mn as transition metal elements, which may optionally contain Al as an optional component, and that has a rock-salt type crystal structure with a layered structure is preferred from the viewpoint of achieving high capacity.

As the binder, conductive material, and the like, those exemplified for the negative electrode can be used, for example. The shape and thickness of the positive electrode current collector can be selected from the shapes and ranges for the positive electrode current collector, respectively.

Examples of the material of the positive electrode current collector (conductive sheet) include aluminum (Al), titanium (Ti), iron (Fe), and alloys containing any of these metal elements. Examples of the alloys include Al alloys, Ti alloys, and Fe alloys. An Fe alloy may be stainless steel (SUS).

The thickness of the positive electrode current collector is not particularly limited, and is, for example, 5 µm or more and 300 µm or less.

### (Separator)

As the separator, a porous sheet having ion permeability and insulating properties is used. Examples of the porous sheet include thin films having micropores, woven fabrics, and nonwoven fabrics. The material of the separator is not particularly limited, and a polymer material may be used. Examples of the polymer material include olefin resin, polyamide resin, and cellulose. Examples of the olefin resin include polyethylene, polypropylene, and copolymers of ethylene and propylene. The separator may contain an additive (e.g., an inorganic filler) as necessary. The thickness of the separator is not particularly limited, and is, for example, 5 µm or more and 100 µm or less.

### (Electrolyte)

As the electrolyte, a nonaqueous electrolyte having lithium ion conductivity can be used. The nonaqueous electrolyte is not particularly limited, and a nonaqueous electrolyte used in known nonaqueous electrolyte secondary batteries may be used. The nonaqueous electrolyte contains a nonaqueous solvent and lithium ions and anions that are dissolved in the nonaqueous solvent, for example. The nonaqueous electrolyte may be in a liquid state or a gel state.

The liquid nonaqueous electrolyte is prepared by dissolving a lithium salt in a nonaqueous solvent. When the lithium salt is dissolved in the nonaqueous solvent, lithium ions and anions are generated.

Examples of the nonaqueous solvent include esters, ethers, nitriles, amides, and halogen-substituted compounds thereof. The nonaqueous electrolyte may contain only one type of these nonaqueous solvents, or may contain two or more types. Examples of the halogen-substituted compounds include fluorides. As the lithium salt, LiPF₆ or another lithium salt can be used. The concentration of the lithium salt in the nonaqueous electrolyte may be 0.5 mol/L or more and 3.5 mol/L or less.

### (Housing)

The electrode group and the nonaqueous electrolyte are housed in a housing (battery case). The housing is not particularly limited, and a known housing may be used. The housing usually includes an outer can and a sealing body that seals the opening of the outer can. The outer can is formed, for example, by performing predetermined can making processes with a plate-shaped material such as a SUS plate. The surface of the SUS plate may be nickel-plated. The outer can functions as a negative electrode terminal. The sealing body (sealing plate) functions as a positive electrode terminal. The sealing body may include a sealing plate and a gasket. The gasket is disposed between the sealing plate and the opening end of the outer can for the purpose of providing electric insulation between the sealing plate and the outer can.

### (Positive Electrode Lead and Negative Electrode Lead)

The positive electrode and the sealing body are electrically connected via a positive electrode lead. Examples of the material of the positive electrode lead include aluminum and aluminum alloys. The negative electrode and the outer can are electrically connected through the contact between the negative electrode current collector at the outermost peripheral portion to which the tape is attached and the housing. The negative electrode and the outer can may be further electrically connected via a negative electrode lead. Examples of the material of the negative electrode lead include nickel and nickel alloys.

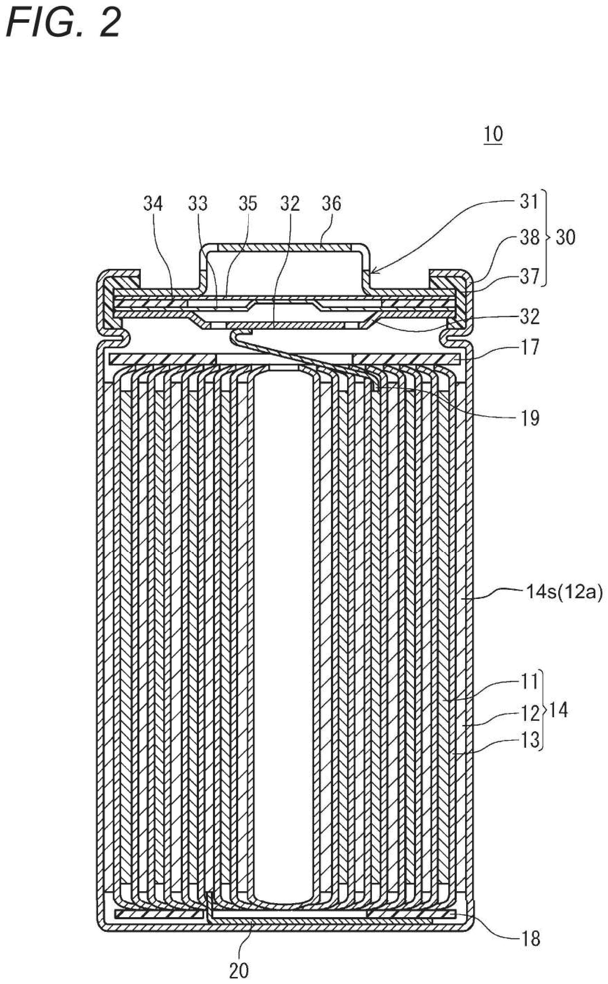

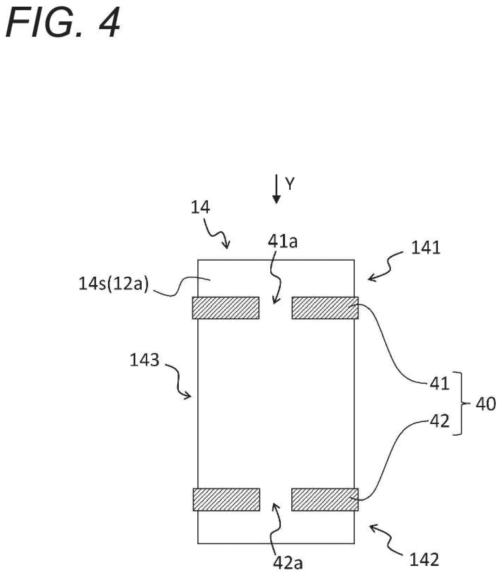

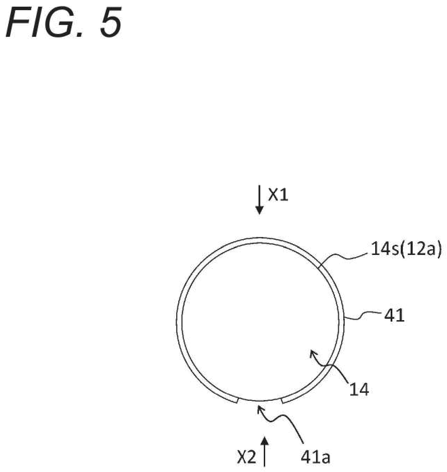

Here, FIG. 2 is a schematic cross-sectional view of an example of a secondary battery according to an embodiment of the present disclosure. Note that a winding stop tape 40 is wound around the peripheral surface of the electrode group 14, but the winding stop tape 40 is omitted in FIG. 2. FIGS. 3 to 5 each are a front view of an example of a wound electrode group with a winding end portion fixed with tape. FIGS. 3 and 4 each are a view of the electrode group as viewed from the side. FIG. 3 is a view as viewed from the X1 direction in FIG. 5, and FIG. 4 is a view as viewed from the X2 direction in FIG. 5. FIG. 5 is a view of the electrode group as viewed from the winding axis direction, and is a view as viewed from the Y direction in FIGS. 3 and 4. The secondary battery according to the present disclosure is not limited to the above.

A cylindrical secondary battery 10 includes a bottomed cylindrical housing (battery case) 30, and a wound electrode group 14 and an electrolyte (not illustrated) each housed in the housing 30. The housing 30 includes an outer can 38 and a sealing body (including a sealing plate 31 and a gasket 37) that seals the opening of the outer can 38. The outer can 38 is a bottomed cylindrical case made of a metal (e.g., SUS). The gasket 37 is disposed between the outer can 38 and the sealing plate 31. In the outer can 38, insulation plates 17 and 18 are disposed at the respective end portions of the electrode group 14.

The sealing plate 31 includes a filter 32, a lower valve body 33, an insulating member 34, an upper valve body 35, and a cap 36. The members except the insulating member 34 are electrically connected to each other.

The electrode group 14, which is columnar, is formed by winding a positive electrode 11, a negative electrode 12, and a separator 13 such that the separator 13 is disposed between the positive electrode 11 and the negative electrode 12. The positive electrode 11, the negative electrode 12, and the separator 13 each have a band shape. The positive electrode 11 includes a positive electrode current collector and positive electrode mixture layers formed on the respective surfaces of the positive electrode current collector. The negative electrode 12 includes a negative electrode current collector and negative electrode mixture layers formed on the respective surfaces of the negative electrode current collector. However, in the entirety of the surface region of the negative electrode 12 that faces the outer can 38 (surface of the negative electrode current collector on the side that faces the outer can), the negative electrode current collector is exposed without supporting the negative electrode mixture layer.

One end of a positive electrode lead 19 is connected to the positive electrode 11, while the other end of the positive electrode lead 19 is connected to the sealing plate 31 (filter 32). That is, the positive electrode 11 is electrically connected to the cap 36 which also serves as a positive electrode terminal. One end of a negative electrode lead 20 is connected to the negative electrode 12, while the other end of the negative electrode lead 20 is connected to the outer can 38 which also serves as a negative electrode terminal.

The bottomed cylindrical outer can 38 houses the electrode group 14 having a winding end portion 14e fixed with the tape 40, and the electrolyte (not illustrated). The secondary battery 10 includes a mechanism by which the electrode group 14 having the winding end portion 14e fixed with the tape 40 is ejected from the opening of the outer can 38 once the sealing body (sealing plate 31) attached to the opening of the outer can 38 comes off upon occurrence of an internal short circuit.

The negative electrode 12 has an outermost peripheral portion 12a disposed at the outermost periphery 14s of the electrode group 14. In the entirety of the surface region of the outermost peripheral portion 12a that faces the outer can 38, the negative electrode current collector is exposed without supporting the negative electrode mixture layer.

The tape 40 includes a first tape 41 and a second tape 42 attached to the negative electrode current collector at the outermost peripheral portion 12a on the side of one end portion 141 and the side of the other end portion 142 of the electrode group 14 in the winding axis direction, respectively.

The negative electrode current collector at the outermost peripheral portion 12a to which the tape 40 (first tape 41 and second tape 42) is attached and the outer can 38 are in contact. On the side of the one end portion 141 of the electrode group 14 in the winding axis direction, the negative electrode current collector at the outermost peripheral portion 12a has a region in contact with the outer can 38 with the first tape 41 therebetween. On the side of the other end portion 142 of the electrode group 14 in the winding axis direction, the negative electrode current collector at the outermost peripheral portion 12a has a region in contact with the outer can 38 with the second tape 42 therebetween. At a central portion 143 of the electrode group 14 in the winding axis direction, the negative electrode current collector at the outermost peripheral portion 12a and the outer can 38 are in direct contact. The above configuration can achieve more stable fixing of the winding end portion 14e of the electrode group 14 and tends to reduce the internal resistance.

The first tape 41 includes a first substrate layer. The second tape 42 includes a second substrate layer. The first substrate layer and the second substrate layer are each a metal base material layer having a coefficient of static friction of 0.8 or less against the material of the outer can 38. The coefficients of static friction of the first substrate layer and the second substrate layer may be substantially the same as or different from each other. The respective metal species contained in first substrate layer and the second substrate layer may be the same as or different from each other.

The first tape 41 includes a first adhesive layer disposed on one surface of the first substrate layer (surface on the side of the outermost peripheral portion). The second tape 42 includes a second adhesive layer disposed on one surface of the second substrate layer (surface on the side of the outermost peripheral portion). The first adhesive layer and the second adhesive layer may each be a conductive adhesive layer. The first adhesive layer and the second adhesive layer may be formed of the same material or different materials.

The tapes 41 and 42 are each wound around the electrode group 41 such that both ends do not overlap. That is, the electrode group 14 has portions 41a and 42 of the outer peripheral surface thereof where the tapes 41 and 42 are not wound in the winding direction of the tapes 41 and 42. The length of the tapes 41 and 42 (dimension of the band-shaped tapes 41 and 42 in the length direction) is preferably shorter than the length of the outer periphery of the electrode group 14 by a value ranging from 1 mm to 7 mm. Preferably, the tapes 41 and 42 are wound around the outer periphery of the electrode group 14, for example, in the range of 0.8 times to 0.99 times.

Adistance L1 between the tape 41 and the one end portion 141 in the winding axis direction of the electrode group 14, and a distance L2 between the tape 42 and the other end portion 142 in the winding axis direction of the electrode group 14, which are indicated in FIG. 3, may each be 2 to 5 mm, for example. L1 and L2 may differ, but it is preferred that L1 and L2 are substantially the same from the viewpoint of facilitating stable fixing of the electrode group.

A distance L3 between the tape 41 and the tape 42 indicated in FIG. 3 is preferably 18 to 46 mm. In this case, it is easy to sufficiently ensure the area where the negative electrode current collector at the outermost peripheral portion 12a and the outer can 38 are in direct contact at the central portion 143 of the electrode group 14 in the winding axis direction.

In the illustrated example, the negative electrode lead 20 is provided, but the negative electrode lead 20 does not need to be provided. Even when the negative electrode lead 20 is not provided, the negative electrode 12 and the outer can 38 are electrically connected through the contact between the inner surface of the outer can 38 and the electrode group 14 (the outermost peripheral portion 12a) having the winding end portion 14e fixed with the tape 40, thereby enabling sufficient reduction in internal resistance.

In the illustrated example, each of the first tape and the second tape includes a metal base material layer, but either one of the first tape and the second tape may include a resin substrate layer. In this case, the influence of the resin tape is insignificant, while the metal tape provides an effect of reducing the internal resistance as well as an effect of suppressing delay of electrode group ejection. Examples of the resin contained in the resin substrate layer include polypropylene resins. The resin substrate layer preferably has a coefficient of static friction of 0.8 or less against the material of the outer can. If either one of the first tape and the second tape includes a metal base material layer having a coefficient of static friction of more than 0.8 against the material of the outer can, a delay in the electrode group ejection occurs.

### << Supplemental Note >>

According to the above description of the embodiments, the following techniques are disclosed.

### (Technique 1)

A secondary battery including:
an electrode group in which a positive electrode, a negative electrode including a negative electrode current collector, and a separator disposed between the positive electrode and the negative electrode are wound;
a tape that fixes a winding end portion of the electrode group;
an electrolyte; and
an outer can with a bottomed cylindrical shape that houses the electrode group, the tape, and the electrolyte,
wherein the negative electrode has an outermost peripheral portion disposed at an outermost periphery of the electrode group,
the tape includes a metal base material layer, and is attached to the negative electrode current collector at the outermost peripheral portion,
the negative electrode current collector at the outermost peripheral portion to which the tape is attached and the outer can are in contact, and
a coefficient of static friction of the metal base material layer against a material of the outer can is 0.8 or less.

### (Technique 2)

The secondary battery according to Technique 1, wherein a coefficient of static friction of the metal base material layer against the material of the outer can is 0.6 or less.

### (Technique 3)

The secondary battery according to Technique 1 or 2, wherein the negative electrode includes a negative electrode mixture layer supported on the negative electrode current collector, and
the negative electrode mixture layer is not supported in at least a portion of a region of the outermost peripheral portion that faces the outer can.

### (Technique 4)

The secondary battery according to any one of Techniques 1 to 3, wherein the metal base material layer contains at least one selected from the group consisting of nickel, iron, copper, titanium, zinc, silver, gold, and stainless steel.

### (Technique 5)

The secondary battery according to any one of Techniques 1 to 4, wherein the material of the outer can includes stainless steel.

### (Technique 6)

The secondary battery according to any one of Techniques 1 to 5, wherein the tape includes an adhesive layer, and
the adhesive layer is disposed on a surface of the metal base material layer on a side of the outermost peripheral portion.

### (Technique 7)

The secondary battery according to any one of Techniques 1 to 6, wherein a thickness of the tape is 250 µm or less.

### (Technique 8)

The secondary battery according to any one of Techniques 1 to 7, wherein a width of the tape is 4 mm or more and 12 mm or less.

### (Technique 9)

The secondary battery according to any one of Techniques 1 to 8, wherein a length of the tape is shorter than a length of an outer periphery of the electrode group by a value ranging from 1 mm to 7 mm.

### (Technique 10)

The secondary battery according to any one of Techniques 1 to 9, wherein the tape includes a first tape and a second tape attached to the negative electrode current collector at the outermost peripheral portion on one end side and another end side of the electrode group in a winding axis direction, respectively,
the first tape and the second tape each include the metal base material layer, the metal base material layer having a coefficient of static friction against the material of the outer can of 0.8 or less, and
at a central portion of the electrode group in the winding axis direction, the negative electrode current collector at the outermost peripheral portion and the outer can are in contact.

### [Examples]

The following specifically describes the present disclosure based on examples and comparative examples. However, the present disclosure is not limited to the following examples.

### <<Secondary batteries E1 to E9 and R1 to R3>>

### (Positive Electrode Production)

A positive electrode slurry was prepared by mixing a positive electrode active material, acetylene black, and polyvinylidene fluoride (PVDF) in a mass ratio of 95:2.5:2.5, further adding an appropriate amount of N-methyl-2-pyrrolidone, and stirring the resulting mixture. A lithium-containing transition metal oxide containing nickel, cobalt, and aluminum was used as the positive electrode active material. Next, the positive electrode slurry was applied to both surfaces of an aluminum foil serving as a positive electrode current collector. The resulting coated films were dried and rolled using a roller to form positive electrode mixture layers. The positive electrode current collector having the positive electrode mixture layers formed on both surfaces thereof was cut into a predetermined size. Thus, a positive electrode was produced.

### (Negative Electrode Production)

A negative electrode slurry was prepared by mixing graphite (a negative electrode active material), styrene-butadiene copolymer rubber (SBR), and Na salt of carboxymethyl cellulose (CMC-Na) in a mass ratio of 98:1:1, further adding an appropriate amount of water, and stirring the resulting mixture. Next, the negative electrode slurry was applied to both surfaces of a copper foil serving as a negative electrode current collector. The resulting coated films were dried and rolled using a roller to form negative electrode mixture layers. The negative electrode current collector having the negative electrode mixture layers formed on both surfaces thereof was cut into a predetermined size. Thus, a negative electrode was produced. On one surface of the region of the negative electrode corresponding to the outermost peripheral portion (entirety of the region that faces the outer can), the negative electrode current collector was exposed without forming the negative electrode mixture layer.

The coefficient of static friction of the negative electrode current collector at the outermost peripheral portion against the material of the outer can was 0.6 or less.

### (Nonaqueous Electrolyte Preparation)

A nonaqueous electrolyte was prepared by dissolving LiPF₆ in a mixed solvent of ethylene carbonate and dimethyl carbonate (volume ratio 3:7) to a concentration of 1.0 mol/L.

### (Electrode Group Production)

One end of an aluminum-made positive electrode lead was attached to the positive electrode. One end of a nickel-made negative electrode lead was attached to the negative electrode. In an inert gas atmosphere, the positive electrode and the negative electrode were spirally wound with a polyethylene-made porous film as a separator interposed therebetween to produce an electrode group.

### (Fixing of Winding End Portion of Electrode Group)

The winding end portion of the electrode group was fixed with tape. Specifically, as illustrated in FIGS. 3 to 5, a first tape 41 and a second tape 42 were attached to respective two locations on the outer periphery 14s of the electrode group 14 (on the side of the one end portion 141 and the side of the other end portion142 in the winding axis, respectively). The first tape 41 included a first substrate layer and a first adhesive layer formed on one of the surfaces of the first substrate layer (surface on the side of the outermost peripheral portion). The second tape 42 included a second substrate layer and a second adhesive layer formed on one of the surfaces of the second substrate layer (surface on the side of the outermost peripheral portion).

The materials of the first substrate layer and the second substrate layer each were a corresponding one of the materials shown in Table 1. Note that PP in Table 1 refers to polypropylene resin. The coefficient of static friction of the first substrate layer against the material of the outer can and the coefficient of static friction of the second substrate layer against the material of the outer can each were corresponding one of the values shown in Table 1.

The thicknesses of the first tape 41 and the second tape 42 were set to 150 µm where a metal base material layer was used and 30 µm where a PP substrate layer was used. The widths of the first tape 41 and the second tape 42 were set to 9 mm.

The lengths of the first tape 41 and the second tape 42 were each set to be 2 mm shorter than the length of the outer periphery 14s of the electrode group 14.

The distance L1 between the first tape 41 and the one end portion 141 of the electrode group 14 in the winding axis direction and the distance L2 between the second tape 42 and the other end portion142 of the electrode group 14 in the winding axis direction were each set to 5 mm. The distance L3 between the first tape 41 and the second tape 42 was set to 36 mm.

The thicknesses of the first adhesive layer and the second adhesive layer were set to 30 µm where the metal base material layer was used and 10 µm where the PP substrate layer was used. An acrylic adhesive was used as the material for the first adhesive layer and the second adhesive layer.

### (Secondary Battery Assembly)

A bottomed cylindrical outer can made of stainless steel (SUS) was prepared. The electrode group was housed in the outer can. In doing so, the other end of the positive electrode lead was connected to a sealing plate, and the other end of the negative electrode lead was connected to the inner bottom surface of the outer can. The nonaqueous electrolyte was injected, and then, the opening of the outer can was sealed by covering it with the sealing plate. In doing so, a gasket was interposed between the sealing plate and the opening end of the outer can. In this manner, cylindrical nonaqueous electrolyte secondary batteries were fabricated.

### [Evaluation]

Each of the secondary batteries was subjected to constant current charging at a current of 500 mA until the voltage reached 4.2 V so that the secondary battery was in a fully charged state. The internal resistance at that point was measured.

Furthermore, an internal short circuit test by heating was performed. Specifically, each secondary battery in the fully charged state was placed in a furnace at 200°C to activate the electrode group ejection mechanism. The temperature near the center of the side surface of the cylindrical battery was measured using a thermocouple, and the maximum temperature at that point was measured.

**[Table 1]**

| Secondary battery | Material of housing | Negative electrode current collector | First tape (first substrate layer) | | Second tape (second substrate layer) | | Secondary battery evaluation | |
|---|---|---|---|---|---|---|---|---|
| | | | Material | Coefficient of static friction | Material | Coefficient of static friction | Internal resistance (mΩ) | Maximum temperature at internal short circuit (°C) |
| E1 | SUS | Cu foil | Cu | 0.46 | PP | 0.36 | 10.1 | 668 |
| E2 | SUS | Cu foil | PP | 0.36 | Cu | 0.46 | 10.1 | 659 |
| E3 | SUS | Cu foil | Cu | 0.46 | Cu | 0.46 | 9.8 | 657 |
| E4 | SUS | Cu foil | SUS | 0.52 | PP | 0.36 | 11.5 | 706 |
| E5 | SUS | Cu foil | PP | 0.36 | SUS | 0.52 | 11.4 | 708 |
| E6 | SUS | Cu foil | SUS | 0.52 | SUS | 0.52 | 10.9 | 698 |
| E7 | SUS | Cu foil | Ni | 0.58 | PP | 0.36 | 11.3 | 698 |
| E8 | SUS | Cu foil | PP | 0.36 | Ni | 0.58 | 11.3 | 696 |
| E9 | SUS | Cu foil | Ni | 0.58 | Ni | 0.58 | 10.7 | 687 |
| R1 | SUS | Cu foil | PP | 0.36 | PP | 0.36 | 11.9 | 739 |
| R2 | SUS | Cu foil | Al | 0.82 | Al | 0.82 | 10.2 | 766 |
| R3 | SUS | Cu foil | Cu | 0.46 | Al | 0.82 | 10.0 | 744 |

In secondary batteries E1 and E2 in which either one of the first tape and the second tape is a Cu tape and the other of the first tape and the second tape is a PP tape, the internal resistance was reduced and the temperature rise during the internal short circuit was suppressed. In secondary battery E3 in which both the first tape and the second tape are Cu tapes, the internal resistance was further reduced and the temperature rise during the internal short circuit was further suppressed.

In secondary batteries E4 and E5 in which either one of the first tape and the second tape is a SUS tape and the other of the first tape and the second tape is a PP tape, the internal resistance was reduced and the temperature rise during the internal short circuit was suppressed. In secondary battery E6 in which both the first tape and the second tape are SUS tapes, the internal resistance was further reduced and the temperature rise during the internal short circuit was further suppressed.

In secondary batteries E7 and E8 in which either one of the first tape and the second tape is an Ni tape and the other of the first tape and the second tape is a PP tape, the internal resistance was reduced and the temperature rise during the internal short circuit was suppressed. In secondary battery E9 in which both the first tape and the second tape are Ni tapes, the internal resistance was further reduced and the temperature rise during the internal short circuit was further suppressed.

In secondary battery R1 in which both the first tape and the second tape are PP tapes, the internal resistance increased due to the presence of the PP tapes, which have high resistance, between the outer can and the electrode group.

In secondary battery R1, since both the first tape and the second tape were PP tapes, the influence of PP melting during the short circuit was significant (the amount of PP welded between the outer can and the electrode group was large), which caused a delay in electrode group ejection, increasing the maximum temperature in the short circuit.

By contrast, in secondary batteries E1, E2, E4, E5, E7, and E8, either one of the first tape and the second tape was a PP tape, and the other of the first tape and the second tape was a Cu tape, SUS tape, or Ni tape. Accordingly, the influence of PP melting during the short circuit was small, and the temperature rise during short circuit was suppressed.

In secondary battery R2 in which both the first tape and the second tape are Al tapes, the maximum temperature in the short circuit significantly increased due to the delay in electrode group ejection, because the coefficient of static friction of the Al tapes was as high as 0.8 or more. In secondary battery R3, the first tape is a Cu tape, while the second tape is an Al tape with a high coefficient of static friction of more than 0.8. As a result, the maximum temperature in the short circuit increased due to the delay in electrode group ejection.

### [Industrial Applicability]

The present disclosure can be utilized for a secondary battery in which a wound electrode group is housed in the outer can.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10: secondary battery, 11: positive electrode, 12: negative electrode, 12a: outermost peripheral portion of negative electrode, 13: separator, 14: electrode group, 14s: outermost periphery of electrode group, 14e: winding end portion of electrode group, 31: sealing plate, 38: outer can, 40: tape, 41: first tape, 42: second tape

## Claims

1. A secondary battery comprising:
an electrode group in which a positive electrode, a negative electrode including a negative electrode current collector, and a separator disposed between the positive electrode and the negative electrode are wound;
a tape that fixes a winding end portion of the electrode group;
an electrolyte; and
an outer can with a bottomed cylindrical shape that houses the electrode group, the tape, and the electrolyte,
wherein the negative electrode has an outermost peripheral portion disposed at an outermost periphery of the electrode group,
the tape includes a metal base material layer, and is attached to the negative electrode current collector at the outermost peripheral portion,
the negative electrode current collector at the outermost peripheral portion to which the tape is attached and the outer can are in contact, and
a coefficient of static friction of the metal base material layer against a material of the outer can is 0.8 or less.

2. The secondary battery according to claim 1,
wherein a coefficient of static friction of the metal base material layer against the material of the outer can is 0.6 or less.

3. The secondary battery according to claim 1,
wherein the negative electrode includes a negative electrode mixture layer supported on the negative electrode current collector, and
the negative electrode mixture layer is not supported in at least a portion of a region of the outermost peripheral portion that faces the outer can.

4. The secondary battery according to claim 1,
wherein the metal base material layer contains at least one selected from the group consisting of nickel, iron, copper, titanium, zinc, silver, gold, and stainless steel.

5. The secondary battery according to claim 1,
wherein the material of the outer can includes stainless steel.

6. The secondary battery according to claim 1,
wherein the tape includes an adhesive layer, and
the adhesive layer is disposed on a surface of the metal base material layer on a side of the outermost peripheral portion.

7. The secondary battery according to claim 1,
wherein a thickness of the tape is 250 µm or less.

8. The secondary battery according to claim 1,
wherein a width of the tape is 4 mm or more and 12 mm or less.

9. The secondary battery according to claim 1,
wherein a length of the tape is shorter than a length of an outer periphery of the electrode group by a value ranging from 1 mm to 7 mm.

10. The secondary battery according to claim 1,
wherein the tape includes a first tape and a second tape attached to the negative electrode current collector at the outermost peripheral portion on one end side and another end side of the electrode group in a winding axis direction, respectively,
the first tape and the second tape each include the metal base material layer, the metal base material layer having a coefficient of static friction against the material of the outer can of 0.8 or less, and
at a central portion of the electrode group in the winding axis direction, the negative electrode current collector at the outermost peripheral portion and the outer can are in contact.
